Europäisches Patentamt

European Patent Office

Office européen des brevets

(11) Publication number: **0 419 955 A2**

# EUROPEAN PATENT APPLICATION

(21) Application number: **90117632.1**

(22) Date of filing: **13.09.90**

(51) Int. Cl.5: **G11B 11/10**

(30) Priority: **28.09.89 DE 3932407**

(43) Date of publication of application:
**03.04.91 Bulletin 91/14**

(84) Designated Contracting States:
**DE FR GB**

(71) Applicant: **INTERNATIONAL BUSINESS MACHINES CORPORATION**

**Armonk, NY 10504(US)**

(72) Inventor: **Trippel, Gerhard, Dr. Dipl.-Phys.**
**Steinenbronner Strasse 15**
**W-7032 Sindelfingen(DE)**
Inventor: **Pokrowsky, Peter**
**Feldbergstrasse 61**
**W-7032 Sindelfingen(DE)**
Inventor: **Brunsch, Arwed, Dr. Dipl.-Phys.**
**Am Bopserweg 8**
**W-7000 Stuttgart 1(DE)**

(74) Representative: **Herzog, Friedrich Joachim, Dipl.-Ing.**
**IBM Deutschland GmbH Schönaicher Strasse 220**
**W-7030 Böblingen(DE)**

(54) **Magneto-optical disk storage system with erase and write/read laser device.**

(57) In a magneto-optical disk storage system two lasers are provided. One laser generates a write beam 11, that eventually can also be used as read beam, which through a lens 10 is focussed in the focussing point 12 of a magneto-optical storage layer 3 of a magneto-optical storage disk 1 for writing and eventually reading data. Through this same lens 10, the second laser focusses an erase beam 13 onto a focussing point 14 in storage layer 3. Both focussing points 12 and 14 are closely adjacent which a spacing of about 1 mm on one and the same data track. The magnetic field required for erasing and writing is provided by oppositely polarized poles 7 and 8 of a magnet, preferably of a permanent magnet 9 of horseshoe shape. The poles are provided at a small distance of about 0.5 mm from the storage layer and in track direction have roughly the same spacing as focussing points 12 and 14. The magnetic poles extend radially over the entire data area width of the disk and are stationary. This arrangement permits the more or less direct overwriting of data to be erased in an immediately preceding process, also witn magneto-optical storage technology. This considerably facilitates the integration in existing magnetic-disk storage systems.

FIG. 1

## MAGNETO-OPTICAL DISK STORAGE SYSTEM WITH ERASE AND WRITE/READ LASER DEVICE

The invention relates to a magneto-optical disk storage system with write/read and erase laser devices, in accordance with the preamble of claim 1.

A magneto-optical disk storage system according to the preamble of claim 1 is known from US Patent 4,701,895. There, the differing magnetic field direction required for recording and erasing is provided by a cylindrical permanent magnet. This magnet has its north and south pole in locations oppositely placed at 180°, and is arranged radially to the disk and transversely crossing the data area. During recording the south pole is e.g. opposite the storage layer, but upon erasing the cylindrical magnet is turned by 180° so that under the influence of the north pole magnetic field the same laser beam can now align the magneto-optical areas existing there in opposite direction, and can thus erase the recorded information.

A disadvantage of this known arrangement is that new data cannot be written into the disk upon the old data being erased more or less simultaneously. As a consequence, the technique of "overwriting" of old data known from magnetic disk storage technology cannot be realized. This known magneto-optical storage disk arrangement will require at least one disk rotation for being able to erase with one and the same head device on the one hand, and to record during the next rotation on the other.

A basically similar arrangement is known from IBM Technical Disclosure Bulletin, Vol. 29, No. 8, Jan. 1987, pages 3666 and 3667. There, a magnet with two adjacent poles of opposite polarity is provided arranged radially to the disk. So as to be able to perform erase function on the one hand and write function on the other in relation to one and the same laser beam, either the one or the other pole is placed under the focal point of the laser beam. For placing the other polarity of the magnet under the focal point of the laser beam, the magnet is shifted mechanically in tangential direction to the disk by means of an actuator. It is obvious that this arrangement does not permit a direct "overwriting", either; in fact, the new writing-in of data can be performed after another disk rotation at the earliest by one an the same head.

For allowing the so-called direct "overwriting" in magneto-optical disks various methods have been suggested:

In the so-called two-head system a write/read head and a separate erase head are provided. However, the disadvantage of this process is that two complete head arrangements including the entire track following technology have to be provided.

As the optical head represents an essential part of the overall costs of the storage system this involves high costs. Additionally, there is a wide space between erasing and "overwriting".

Another method consists in that a high frequency alternating magnetic field is used. There is, however, a data rate restriction because the magnetic field cannot be re-poled with sufficient speed. Furthermore, there is a high energy consumption for maintaining the magnetic field by an electromagnet.

Still another method consists in that a magneto-optical double layer is used which is initialized with an auxiliary magnet upon each rotation. Th disadvantage of this version, however, is the complicated layer structure with extremely small tolerances for the magnetic characteristics of the individual layers.

From EP-A-0 332 408 a magneto-optical recording device is known, which is capable of erasing, recording and/or reproducing information on the same track of a magneto-optical disk recording medium apparently at the same time. Three separate laser sources are provided for emitting an erasing light beam, a recording light beam, and a reproduction light beam to the recording medium, with each of the laser sources being adapted to irradiate the same tract on the recording medium with a light spot in such a manner that the light spots from the three laser sources are arranged in the above stated order - erasing, recording, reproduction - from the upstream side of the advancing track. Constant magnetic bias fields in opposite directions are generated at locations where the light beams from the first, erasing, and second, recording, light beam laser sources are irradiated. In this magneto-optical recording device the magnets to provide the constant magnetic bias fields are attached to a carriage so that they move together with the optical systems across the disk diameter. This has the drawback, that these magnets with each access have to be moved radially. This fact makes the processing slow. Furthermore this known device provides at least two optical systems with three laser sources. This makes the effort relatively great.

From EP-A-0 315 415 an overwriting information device for a magneto-optical memory is known. Here in alternating fashion a writing or a erasing laser beam is focussed through one and the same optic onto the disk. No focussing of two different beams at the same time on the two different spots of the disk, one for erasing and one for writing, as provided-by the present invention is shown herein.

It is the object of the present invention to provide on the basis of an arrangement in accordance with the preamble of claim 1 an uncomplicated and cost-saving arrangement for the direct overwriting of data in a magneto-optical disk storage system.

This object is basically achieved by using the features specified in the characterizing part of claim 1.

In an advantageous manner, owing to the very closely spaced erase and write points with only one lens system being used a simple arrangement is presented which in addition renders the magneto-optical storage system basically compatible with magnetic storage systems, thus considerably facilitating he integration in already existing storage hierarchies.

Advantageous embodiments of the basic solution are given in the subclaims. Of particular advantage is the use of a U-shaped permanent magnet the leg spacing of which seen in disk rotating direction is roughly 1 mm only.

In order to compensate the different bit densities at the inner and outer diameter of the data area of the magneto-optical disk, two alternatives are possible: one, the electronic compensation with parallel poles of the U-shaped permanent magnet, where the laser beams impinge on the optical lens in parallel direction and are focussed equally spaced from the inside to the outside on the disk.

The other alternative consists in that the magnetic poles converge with a decreasing radius, so that the incident laser beams and their focussing points converge correspondingly from the outside to the inside.

The distance between rotating magneto-optical disk and the poles of different polarity can advantageously amount to 0.5 mm approximately, so that there is enough tolerance for the high rotational speeds of the disk.

Further suitable embodiments and their advantages are given either in the subclaims direct or in the subsequent specific description.

The invention will be described in detail with reference to the following description and the embodiments represented in the Figures, which depict the following:

Fig. 1 sectionally the basic arrangement in accordance with the invention;

Fig. 2 schematically in a plan view, front view and side view a first embodiment according to the invention; and

Fig. 3 schematically in a plan view, front view and side view a second embodiment of the invention.

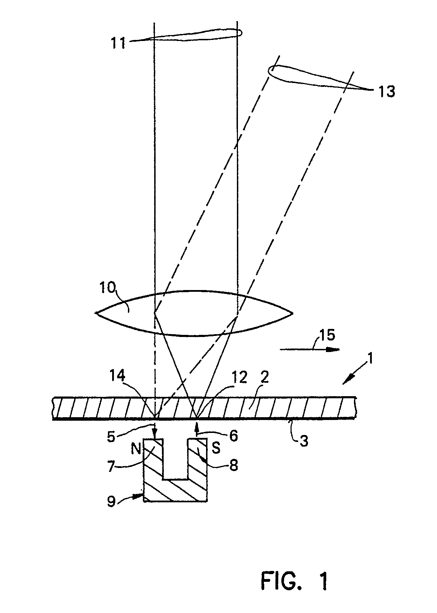

Fig. 1 depicts schematically the basic idea of the invention. A side view shows a section of a magneto-optical storage disk 1 which substantially consists of a transparent substrate 2 on which at least on one side a very thin magnetic storage layer 3 is deposited. This magnetic storage layer 3 is magnetizable vertically, as indicated by the two arrows 5 and 6 over a north pole 7 and a south pole 8 of a U-shaped permanent magnet 9. Arrows 5 and 6 are to represent the magnetizing field of the two magnetic poles of opposite polarity of poles 7 and 8. As pointed out above, however, they equally indicate the possible vertical magnetization of the one or of the opposite direction in which the magneto-optical storage disk can be magnetized. A write/read laser beam 11 is focussed through a lens system 10 onto point 12 in the plane of storage layer 3 of magneto-optical disk 1. A second laser beam, i.e. erase beam 13 is directed through the same lens system 10, and focussed in point 14 on the storage layer 3 of magneto-optical disk 1. As a material for storage layer 3 suitable known iron-boron or iron-terbium alloys can be used.

As specified above, laser beams 11 and 13 are focussed through a common lens 10 in storage layer 3 of the magneto-optical disk 1 in points 12 and 14. These points 12 and 14 are on the same track and closely adjacent, the spacing amounting to about 1 mm. As also shown in the Figure, the tips of the two poles 7 and 8 of the stationary U-shaped permanent magnet 9 are arranged with small spacings of approximately 0.5 mm. As mentioned above they are of opposite polarity, and in direction 15, i.e. track direction they also have a spacing of about 1 mm. The magneto-optical storage disk 1 rotates in the direction of arrow 15 from left to right in accordance with Fig. 1. As a result, a specific point of the disk first reaches the focussing point 14 of erase beam 13 where, in combination with the magnetization direction of north pole 7 the information existing there is erased. Within the small spacing of the two poles 7 and 8 of about 1 mm this specific point of disk 1 after having passed in the direction of arrow 15 then arrives within the range of write beam 11 at focussing point 12 and can again be written on. With the small distance of about 1 mm between the two poles 7 and 8 the area erased at point 14 thus reaches the area of point 12, where by means of write beam 11 new data can be written in the same place of the magnetic storage disk 3. In this manner without one additional and without one complete revolution or a substantial partial revolution of disk 1 new data have been written in the same storage position.

Due to the effect that both beams 11 and 13 are focussed through the same lens 10 onto the same track, only one servo-device is required for track following, and only one common track access mechanism for the track access. Beam 11 used for writing can also be used as a reading beam for reading out the information contained in the individual bit cells of storage layer 3. It is, however, basically possible to use one specific laser of lower capacity for reading the stored information.

Instead of the U-shaped permanent magnet 9 of Fig. 1 the two poles 7 and 8 of opposite polarity can also be realized by individual magnets. These can be permanent or electromagnets. A particular advantage of the U-shaped permanent magnet consists in that the opposite polarity of the fields required for erasing or writing is automatically ensured, and that for generating the fields no electronics are required. The leg spacing in motion direction 15 of the magnetic disk from pole center to pole center between poles 7 and 8 preferably equals the spacing of the two focussing points 12 and 14 of the two laser beams 11 and 13 in crack direction. This geometry of the arrangement guarantees on the one hand a vertical field above the pole legs, and on the other, with the spacing of about 0.5 mm to the disk, that this is a mechanically save spacing tolerance.

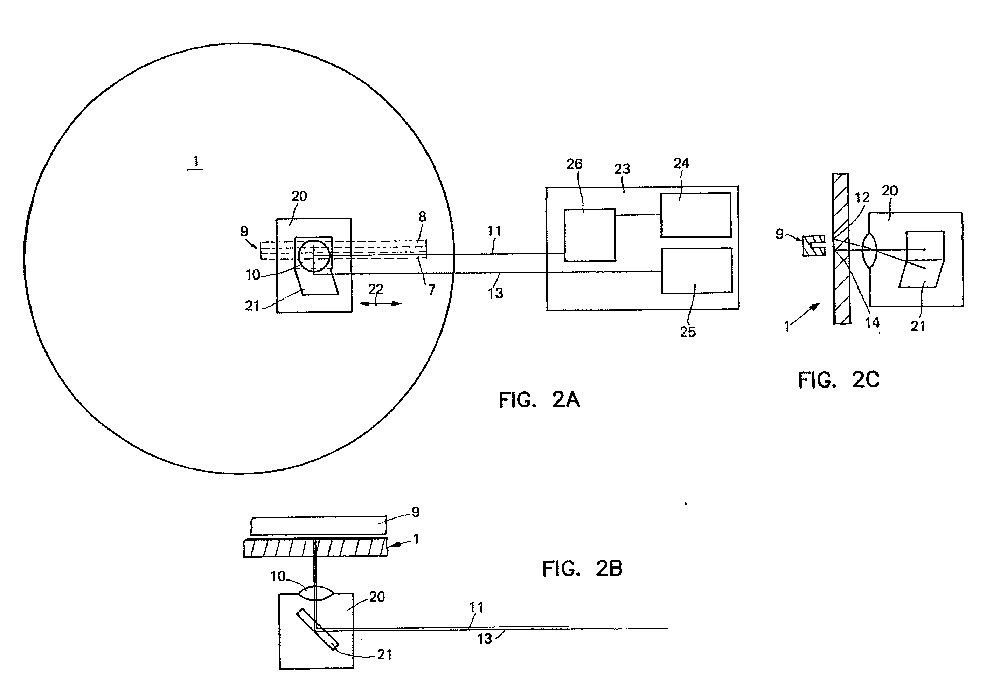

With reference to the three different illustrations Fig. 2A, 2B and Fig. 2C, Fig. 2 represents an embodiment of the invention. The plan view of Fig. 2A shows schematically that an actuator 20 is equipped with objective lens 10 and a folded mirror 21. By means of actuator 20, these parts can be shifted in radial direction 22 in two directions toward the inside of the magneto-optical storage disk 1 or toward its outside. The stationary U-shaped permanent magnet 9 is given in dashed lines beneath magnetic disk 1 in the plan view of Fig. 2A. In this embodiment, the two poles 7 and 8 are aligned in parallel and radially to each other. They cover the entire width of the data area of magneto-optical disk 1. In the plan view of Fig. 2A at the right side of the disk stationary optics 23 are shown which comprise on tne one hand write/read laser 24 and on the other erase laser 25. Furthermore, an integrated beam analyzer 26 is provided from which emanates write/read beam 11. Parallel thereto, erase beam 13 is directed toward folded mirror 21 and subsequently mirrored in inclined direction into lens 10. Passing through lens 10 the closely adjacent focussing of the two focussing points 12 and 14 is generated, as clearly indicated in the side view of Fig. 2C. In the front view of Fig. 2B, the two beams 11 and 13 are slightly separated although they coincide locally, so as to make them visible in the drawing.

In this embodiment of Fig. 2 where the spacing of poles 7 and 8 is constant over the width of the data area of the magneto-optical storage disk 1 the changes of bit density between inner and outer diameter of the data area are considered electronically in the stationary optics and the evaluating circuit. Then deflecting mirror 21 and object lens 10 are shifted by actuator 20 over the disk radius, the distance between erase beam 13 and write beam 11 remains constant. The dependance of the bit spacing from the disk radius is considered and compensated electronically.

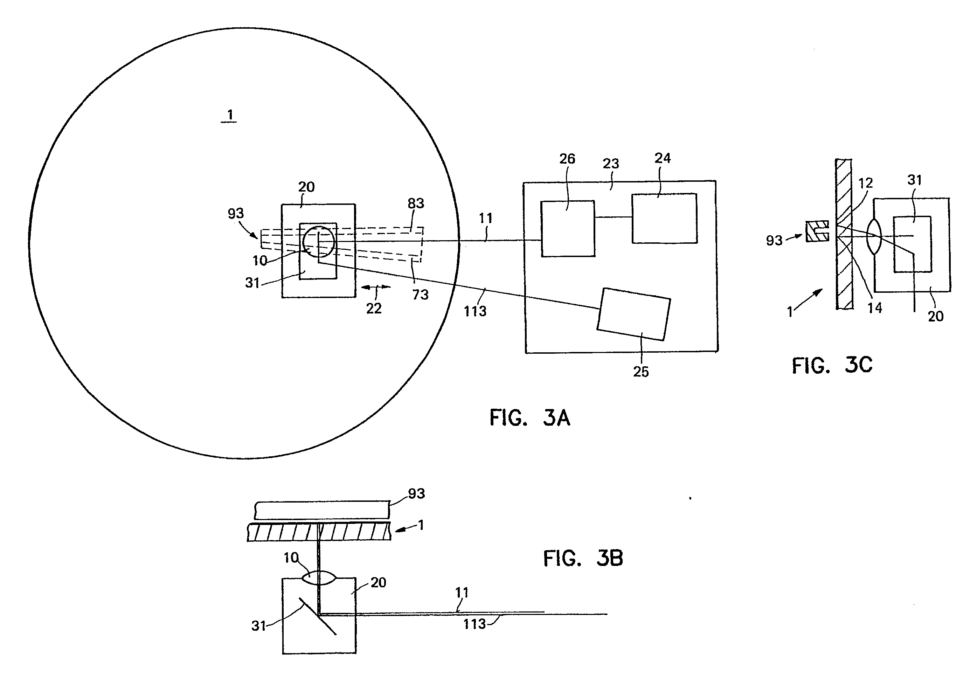

A second embodiment of the invention is shown schematically in Fig. 3, again in the plan view Fig. 3A, the front view Fig. 3B and the side view Fig 3C. The arrangement substantially corresponds to that of Fig. 2, with the exception of the design of the U-shaped permanent magnet whose two poles converge from the outer radius of disk 1 to the inner radius. The dashed line illustration of the stationary magnet 93 clearly shows that poles 83 and 73 move toward each other, i.e. converge from the outer to the inner radius. Furthermore, a flat mirror 31 is provided instead of the folded mirror 21 in Fig. 2. Via this flat mirror 31 an erase beam 113 is mirrored which seen in a plan view converges in incline direction towards write/read beam 11. The angle between read/write beam 11 and erase beam 113 in the plan view of Fig. 3A results from the dependence of the bit density between inner and outer radius. By means of this geometry, i.e. the angle between the beams, the spacing between mirror and disk, and the objective it can thus be made sure that between erase beam 113 and write beam 11, upon the movement of mirror 31 over the disk radius the spacing between these two beams changes in the focussing points to such an extent that the number of bits between the focussing points of the beams remains constant upon a movement over the disk radius. The distance between the focussing points of erase and write beam does thus no longer have to be corrected electronically.

The arrangement illustrated in the Figures shows a write/read and erase head arrangement for the storage layer on one side of the magneto-optical storage disk. In practical use, however, storage disks with storage layers provided on both sides of the carrier are possible, too. In order to operate the second side, an arrangement as depicted in Figs. 2 and 3 can be respectively illustrated in such a manner that an arrangement shifted by 180° is provided with the arrangement of permanent magnet 9 and actuator 20, with lens and mirror, however, being provided on the respective other disk side.

The invention advantageously provides an optical write/read-erase head for a substantially direct data overwriting. It has thus become possible to present a magneto-optical data storage system practically directly compatible with magnetic disk storage systems.

**Claims**

1. Magneto-optical disk storage system with a magnetic field source for generating the magnetic field for the recording and erasing process, and with a laser source and an optical system for focussing the laser beam onto the disk surface for the recording, erasing and reading processes, and with a device for the track access, comprising

a) two closely adjacent magnetic poles (7, 8) of opposite polarity,

b) said poles (7, 8) are aligned in their main orientation direction radially on one side of the disk (1),

c) said poles (7, 8) are arrange stationary with respect to the disk surface,

d) two laser beams (11, 13), one for erasing and the other for recording,

e) both laser beams (11, 13) are arranged and focussed in such a manner that their spots (12, 14) impinge on the disk (1) opposite the two poles (7, 8) of opposite polarity,

f) that specific beam is used as an erase laser beam which seen in rotation direction (15) of the disk (1) is the first (14) to impinge, and

g) the erase (25) as well as the write laser (24) is focussed through one and the same lens system (10) and that both points of impingement (12, 14) are relatively closely spaced with a distance of about 1 mm or less, and that they are focussed onto the same track.

2. System as claimed in claim 1, characterized in that as a magnet with two closely adjacent magnetic poles (7, 8) a permanent magnet (9) is provided, preferably a U-shaped one.

3. System as claimed in claim 1 or 2, characterized in that

a) the closely adjacent magnetic poles (7, 8) are arranged in parallel to each other,

b) the two laser beams (11, 13) are focussed such that their spacing remains constant between the outer and the inner disk diameter, and

c) the changing of the bit density between outer and inner disk diameter is compensated electronically (Fig. 2).

4. System as claimed in claim 1 or 2, characterized in that

a) the closely adjacent magnetic poles (73, 83) converge toward the inner disk diameter,

b) the two laser beams (11, 113) are focussed such that their points of impingment also converge in parallel to the converging magnetic poles, and

c) the convergence is such that the number of bits between inner and outer disk diameter is constant on all tracks between the points of impingment of the two laser beams (Fig. 3).

5. System as claimed in any one of claims 1 to 4, characterized in that identical lasers are used for erasing and for writing.

6. System as claimed in any one of claims 1 to 4, characterized in that identical lasers are used for erasing and writing only, whereas another laser can be provided for reading.

7. System as claimed in any one of claims 1 to 7, characterized in that the laser (24) used for writing is also used for reading.

8. System as claimed in any one of the preceding claims, characterized in that the spacing between the two poles (7, 8; 73, 83) corresponds to the spacing between the two points of impingment of the beams (11, 13; 11, 113), seen in track direction.

9. System as claimed in any one of the preceding claims, characterized in that the spacing between the tips of the poles (7, 8; 73, 83) and the disk (1) is such that a vertical magnetic field (5, 6) is generated in the storage layer (3) of the disk (1), with this spacing amounting to about 0.5 mm so that there is sufficient rotation tolerance for the disk (1).

10. System as claimed in any one of the preceding claims, characterized in that two arrangements consisting of associated magnetic poles, lasers and optical system are provided for co-acting on a double-sided magneto-optical disk, these arrangements being preferably shifted by 180° relative to each other at the disk.

FIG. 1

FIG. 2C

FIG. 2A

FIG. 2B

FIG. 3A

FIG. 3C

FIG. 3B